Europäisches Patentamt

(19) European Patent Office

Office européen des brevets

(11) Veröffentlichungsnummer: **0 036 164**
**B1**

(12) **EUROPÄISCHE PATENTSCHRIFT**

(45) Veröffentlichungstag der Patentschrift:
07.03.84

(51) Int. Cl.³: **B 01 D 59/34,** B 01 D 59/18

(21) Anmeldenummer: **81101724.3**

(22) Anmeldetag: **09.03.81**

(54) **Mit einem Schnellschlussventil ausgerüstete Schlitzdüse zur Herbeiführung impulsartiger Gasströmungen.**

(30) Priorität: **17.03.80 DE 3010178**

(43) Veröffentlichungstag der Anmeldung:
**23.09.81 Patentblatt 81/38**

(45) Bekanntmachung des Hinweises auf die Patenterteilung:
**07.03.84 Patentblatt 84/10**

(84) Benannte Vertragsstaaten:
**FR GB**

(56) Entgegenhaltungen:
**DE - A - 2 557 423**
**DE - A - 2 810 791**
**GB - A - 1 217 225**

**VDI-ZEITSCHRIFT, Band 119, Nr. 11, Juni 1977**
**Düsseldorf "Ventile mit extrem kurzer Einstellzeit"**
**Seiten 569 bis 570**

(73) Patentinhaber: **KRAFTWERK UNION
AKTIENGESELLSCHAFT, Wiesenstrasse 35,
D-4330 Mülheim (Ruhr) (DE)**

(72) Erfinder: **Janner, Karl, Dipl.-Phys., Liegnitzer Strasse 31,
D-8520 Erlangen (DE)**
Erfinder: **Gregorius, Klaus, Dipl.-Phys., Dr.
Alex-Röder-Strasse 1, D-8521 Neunkirchen (DE)**

(74) Vertreter: **Mehl, Ernst, Dipl.-Ing. et al, Postfach 22 01 76,
D-8000 München 22 (DE)**

Mit einem Schnellschlussventil ausgerüstete Schlitzdüse zur Herbeiführung impulsartiger Gasströmungen

Die Erfindung liegt auf dem Gebiet der Trennung gasförmiger Stoffgemische und ist bei der konstruktiven Ausgestaltung einer Schlitzdüse anzuwenden, mit der unter Verwendung eines Schnellschlussventils impulsartige Gasströmungen erzeugt werden können, die im Hinblick auf Impulsdauer und zeitlichen Abstand genau reproduzierbar sind.

Derartige mit einem Schnellschlussventil ausgerüstete Schlitzdüsen werden beispielsweise in Zusammenarbeit mit Pulslasern benötigt, wie sie für fotochemische Prozesse und für Trennprozesse, insbesondere bei der Urananreicherung, eingesetzt werden. Bei einer bekannten Schlitzdüse (DE-A Nr. 2810791) zur Erzeugung eines impulsartigen Gasstrahles ist der Düse ein Schnellschlussventil vorgeschaltet, das aus einem zylindrischen Gehäuse mit einer Schlitzförmigen Einlassöffnung und einer diametral gegenüberliegenden schlitzförmigen Auslassöffnung sowie einem darin rotierenden Hohlzylinder besteht, der ebenfalls zwei sich diametral gegenüberliegende Schlitze aufweist. Abgesehen davon, dass die Öffnungszeit solcher Schnellschlussventile auch bei Verwendung mehrerer nacheinander gezündeter Lasergeräte noch sehr gering ist, bereitet es Schwierigkeiten, den Totraum zwischen dem eigentlichen Ventil und der Düse so klein als irgendmöglich zu machen.

Zur Steuerung der Strömung eines fliessenden Mediums ist an sich eine Schlitzdüse bekannt, deren Schlitzweite einstellbar ist. Hierzu können zwischen den beiden, wippenartig gelagerten Düsenteilen beidseits der Lagerung Druckelemente angeordnet sein, von denen das eine bei seiner Aktivierung die Düsenbacken gegeneinander-, das andere die Düsenbacken auseinanderdrückt (DE-A Nr. 2745900).

Zur Steuerung von Gas- oder Flüssigkeitsströmen sind weiterhin Düsen bekannt, bei denen ein steuerbarer Ventilkörper eine Ventilöffnung verschliesst oder freigibt. Die Bewegung des Ventilkörpers wird dabei durch piezoelektrische Steuerelemente herbeigeführt (US-A Nr. 3055631, GB-A Nr. 1217225, DE-A Nr. 2557423, VDI-Zeitschrift, 1977, S. 569).

Ausgehend von einer mit einem steuerbaren Schnellschlussventil ausgerüsteten Schlitzdüse mit den Merkmalen des Oberbegriffes des Patentanspruches liegt der Erfindung die Aufgabe zugrunde, die Schlitzdüse so auszugestalten, dass die Öffnungs- und Verschlusszeiten einwandfrei justierbar sind und dass unter weitestgehender Vermeidung eines Totraumes zwischen Schnellschlussventil und Schlitzdüse eine einwandfreie Synchronisation mit der pulsartigen Laserstrahlung sichergestellt ist.

Zur Lösung dieser Aufgabe ist gemäss der Erfindung vorgesehen, dass oberhalb des oberen Düsenteiles und/oder unterhalb des unteren Düsenteiles ein piezoelektrisch oder magnetostriktiv wirkendes Verstellelement angeordnet ist, das eine der elastischen Rückstellkraft der Halterung der Düsenteile entgegenwirkende Bewegung des jeweiligen Düsenteiles zur Veränderung der Weite des Düsenschlitzes zwischen Null und seiner Sollgrösse bewirkt.

Bei einer derartigen Ausgestaltung der Schlitzdüse ist diese selbst als Schnellschlussventil ausgebildet, wobei die Weite des Düsenschlitzes praktisch zwischen Null und seiner Sollgrösse durch eine schnelle Bewegung eines oder beider Düsenteile veränderbar ist.

Da die Impulse des die Düse verlassenden Gases, das in bekannter Weise beispielsweise in dieser adiabatisch entspannt und damit unterkühlt wird, sehr kurz sind, beispielsweise $10^{-5}$ s, muss das System Ventil-Düse sehr hohe Eigenfrequenzen und ein sehr kleines schädliches Volumen haben. Beide Forderungen werden dadurch erfüllt, dass das Oberteil und das Unterteil der Schlitzdüse die Schliessfunktion überbehmen. Das schädliche Volumen isr dadurch völlig vermieden, die hohe Eigenfrekuenz wird durch Verwendung von Bewegungselementen grosser Eigenfrequenz erreicht.

Da jedoch die Impulsdauer eines Lasers in der Grössenordnung von 1 μs oder kleiner liegt, ist es zweckmässig, die Bestrahlungszeit durch einen mehrmaligen Durchlauf dieses Laserpulses durch den Gasstrahl zu verlängern und damit gleichzeitig auch die Wirkung der Bestrahlung zu verbessern. Für diesen Zweck kann eine an sich bekannte optische Verzögerungsleitung dienen (,,Appl. Optics'', Aug. 1965, vol. 4, S. 883).

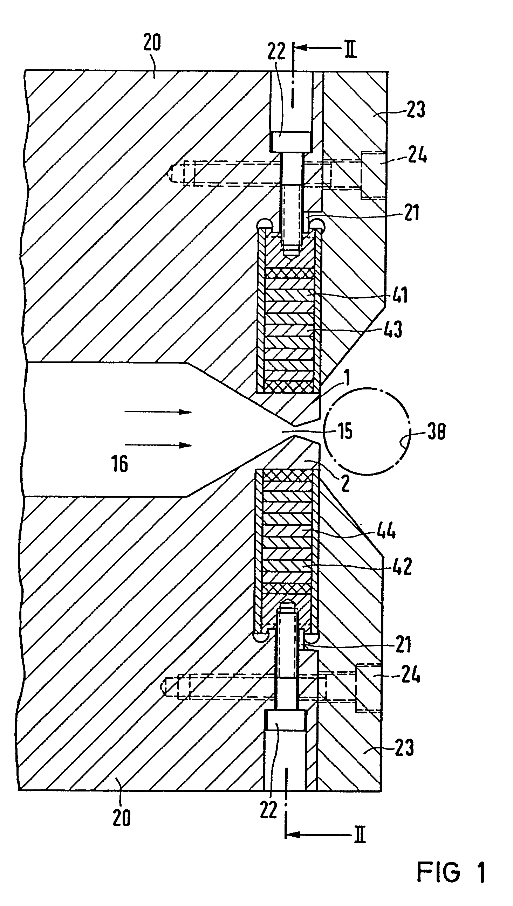

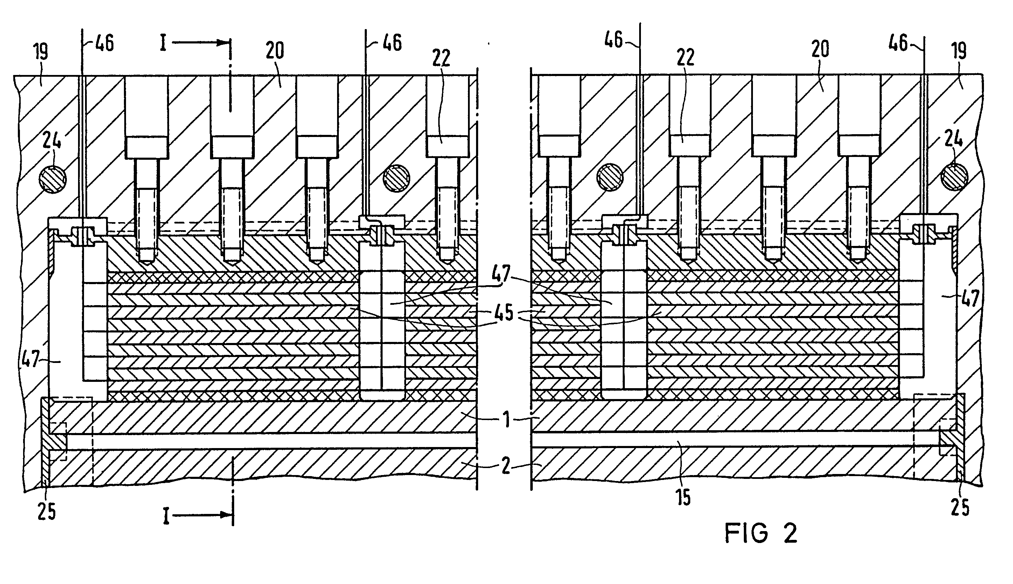

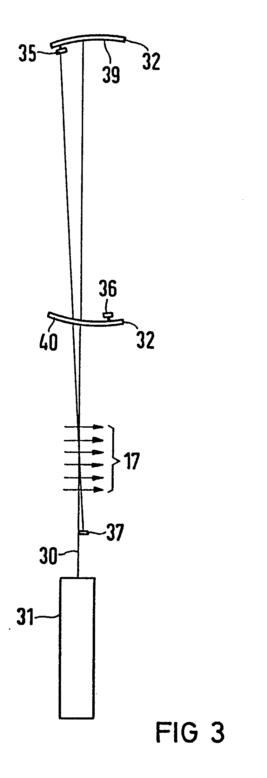

Ein Ausführungsbeispiel der neuen Schlitzdüse ist in den Fig. 1 und 2 dargestellt, wobei die Fig. 1 einen Schnitt entlang der Linie I-I von Fig. 2 und Fig. 2 einen Schnitt entlang der Linie II-II von Fig. 1 darstellt. Fig. 3 zeigt die Anwendungsmöglichkeit dieser Schlitzdüse in Verbindung mit einem Lasergerät sowie einer optischen Verzögerungsstrecke zur Verlängerung der effektiven Wirkung eines Laserpulses.

Entsprechend Fig. 1 gelangt das zu bestrahlende Gas über den Zuführungskanal 16 zum Düsenschlitz 15, dessen Breite unter Umständen in der Grössenordnung Meter liegt. Sie wird begrenzt durch das obere Düsenteil 1 und das untere Düsenteil 2, die einstückig mit dem Düsenkörper 20 verbunden sind. Die Weite des Düsenschlitzes beträgt einige Hundertstel Millimeter. Mit Hilfe der Schrauben 22 sind piezoelektrische Steuerelemente 41 und 42 zwischen den Düsenteilen 1 bzw. 2 und jeweils einem Widerlager 21 im Düsenkörper 20 befestigt. Zu diesem Zweck dienen ausserdem die Haltepratzen 23, die mit Hilfe von Schrauben 24 mit dem Düsenkörper 20 verbunden sind.

Die Ansicht von Fig. 2, die einen Schnitt entlang der Linie II-II von Fig. 1 darstellt, zeigt die längliche Ausbildung des Düsenschlizes 15 sowie die Anordnung der piezoelektrischen Steuerelemente 41. Diese sind aus einer Anzahl von piezoelektrischen Plättchen 43, 44 aufgebaut, die mit metallisierten Oberflächen versehen sind und über die Zuführungsleitung 46 an eine nicht dargestellte steuerbare Spannungsquelle angeschlossen sind. Bei grossen Längen des Düsenschlitzes 15 sind mehrere derartige Stapel 45 von länglichen piezoelektrischen Plättchen 43 bzw. 44 angeordnet. Zwischen diesen und zu den Randzonen hin befinden sich Zwischenräume 47 zur Aufnahme der Zuführungsleitungen 46. Der Düsenschlitz 15 ist seitlich durch am Düsenkörper 20 befestigte Platten 19 abgeschlossen, wobei im Bereich des oberen und unteren Düsenteiles 1 bzw. 2 ein dauerelastischer Dichtkörper 25 vorgesehen ist.

Die Wirkungsweise dieser Einrichtung besteht darin, dass sich bei Anlegen einer Spannung an die piezoelektrischen Plättchen 43 bzw. 44 der ganze Stapel 45 ausdehnt und dadurch die Düsenteile 1 und 2 so lange zusammendrückt, bis der Düsenschlitz 15 geschlossen ist. Nach Wegnahme der Spannung federn die dadurch elastisch verformten Düsenteile 1 und 2 zurück und geben damit wieder den Weg für das zu bestrahlende Gas durch den Zuführungskanal 16 frei. Durch Einschalten des Stromes wird also in diesem Fall der Düsenschlitz geschlossen, durch Abschalten wieder geöffnet. Durch eine Programmierung des Verlaufes des Stromanstieges sowie der Entspannungswerte kann die Bewegung des oberen und unteren Düsenteiles 1 bzw. 2 so gesteuert werden, dass ein gleichmässiges und prellungsfreies Schliessen des gesamten Düsenschlitzes 15 erzielt wird.

Ergänzend sei noch erwähnt, dass die Öffnungs- und Schliesszeiten noch dadurch verkürzt werden können, dass man dem Stapel 45 von länglichen piezoelektrischen Plättchen 43 bzw. 44 eine konische äussere Gestalt gibt. Die Plättchen mit der geringeren Breite liegen dann jeweils am bewegten Ende, wodurch sich für die Gesamtheit der Düsenteile einschliesslich der Piezoelemente eine weitere Massenverringerung ergibt. Die Beeinflussung dieser Öffnungs- und Schliessungszeiten ist ausserdem noch über die mechanische Gestaltung der Verbindung des oberen und unteren Düsenteiles 1 bzw. 2 mit dem übrigen Düsenkörper 20 möglich, da auf diese Weise auch der Elastizitätsmodul einstellbar ist.

Anstelle der verwendeten piezoelektrischen Steuerelemente könnten selbsverständlich in äquivalenter Weise auch solche auf magnetostriktiver Basis Verwendung finden.

Die beschriebene, mit einem steuerbaren Schnellschlussventil ausgerüstete Schlitzdüse ist insbesondere zur Anwendung bei der an sich bekannten Laserisotopentrennung geeignet. Es ist besonders interessant, auf diesem Wege die Anreicherung von Uran an seinem Isotrop Uran 235 vorzunehmen, wobei allgemein die gasförmige Verbindung $UF_6$ Verwendung findet.

Fig. 3 zeigt schematisch die Zuordnung und die Führung des Laserstrahles zum Gasstrahl 17, der den Düsenschlitz 15 verlassen hat und etwa den Querschnitt 38 (s. Fig. 1) besitzt. Über Fenster tritt der Laserstrahl in den Gasstrahl 17 ein und aus. In Fig. 3 ist das Lasergerät mit 31 bezeichnet, der dieses verlassende Laserstrahl mit 30. Er durchsetzt zunächst den Gasstrahl 17 auf seiner ganzen Breite und gelangt in eine Verzögerungsleitung 32. Diese besteht aus zwei nahezu konfokalen Spiegeln 39 und 40, zwischen denen der Strahl mehrfach ausserhalb der Achse hin und her reflektiert wird. Nach der gewünschten Verzögerungszeit trifft dieser Strahl dann auf den Hilfsspiegel 36, wird von diesem zum Hilfsspiegel 35 reflektiert und von diesem wiederum durch den Gasstrahl 17 zum Hilfsspiegel 37. Dabei nimmt der von Hilfsspiegel 37 reflektierte Strahl einen anderen Weg als der ankommende.

Ist die Laserpulsdauer gleich der Verzögerungszeit, so verlängert sich die Bestrahlungszeit bei ununterbrochener Bestrahlung multiplikativ mit der Zahl der Durchläufe. Ist sie kürzer, so entstehen zeitlich Lücken bei entsprechender Verlängerung der Gesamtdauer. Ist die Laserpulsdauer länger als die Verzögerungszeit, so überlappen sich die Pulse, und man hat während der Überlappungszeit höhere Leistungsdichte. Alle drei Fälle sind von praktischem Interesse und können durch eine entsprechende Einstellung der Steuerelemente sowie der Verzögerungsstrecke in Verbindung mit dem Lasergerät verwirklicht werden. So kann der erste und der zweite Fall für Vorgänge mit relativ langer Lebensdauer der angeregten Zustände z.B. bei der selektiven Kondensation (DE-A Nr. 2849162) in Frage kommen. Der letztgenannte Fall z.B. bei Vorgängen, für die eine zeitliche Formung des Laserpulses günstig ist, wie z.B. bei der Mehrstufenanregung.

Die im Laserstrahl enthaltene Restenergie kann durch eine bekannte Art der Strahlführung in den Laser zurückgeführt oder aber auch einem zweiten Laser zugeführt werden, um damit einen weiteren Lichtimpuls auszulösen.

## Patentanspruch

Mit einem steuerbaren Schnellschlussventil ausgerüstete Schlitzdüse zur Herbeiführung impulsartiger Gasströmungen für die selektive, mit pulsartiger Laserstrahlung erfolgende Anregung von gasförmigen Stoffgemischen, insbesondere Isotopengemischen, bestehend aus einem Düsenkörper mit einem oberen und einem unteren, den Düsenschlitz bildenden Düsenteil und aus einer dem Düsenschlitz zugeordneten, impulsartig öffnen- und schliessbaren Öffnung für eine Gasströmung, dadurch gekennzeichnet, dass oberhalb des oberen Düsenteiles (1) und/oder unterhalb des unteren Düsenteiles (2) piezoelektrische oder magnetostriktive Steuerelemente (41, 42) angeordnet sind, die eine der elastischen Rückstellkraft der Halterung der Düsenteile entgegenwirkende Bewegung des jeweiligen Düsenteiles zur Veränderung der Weite des Düsenschlitzes (15) zwischen Null und seiner Sollgrösse bewirken.

## Revendication

Tuyère à fente, munie d'une soupape à fermeture instantanée et destinée à engendrer des courants gazeux de type à impulsions, pour l'excitation sélective, par un rayonnement laser de type pulsé, de mélanges de matière sous forme gazeuse, notamment de mélanges d'isotropes, constituée d'un corps de tuyère, ayant une partie de tuyère supérieure et une partie de tuyère inférieure qui forment la fente de la tuyère, et d'une ouverture pour un courant gazeux, qui peut être ouverte et fermée par impulsions et qui est associée à la fente de tuyère, caractérisée en ce que, au-dessus de la partie supérieure (1) de la tuyère et/ou en dessous de la partie inférieure (2) de la tuyère, sont disposés des éléments de commande (41, 42) piézo-électriques ou magnétostrictifs, qui donnent respectivement à la partie de tuyère concernée un mouvement agissant à l'encontre de la force de rappel élastique du dispositif de montage des parties de tuyère, pour faire varier la largeur de la fente de la tuyère (15) entre zéro et sa valeur de consigne.

**Claim**

A slotted nozzle, equipped with a controllable quick-acting shut-off valve for producing pulsed gas flow of gaseous mixtures, more particularly isotropic mixtures, for selective excitation thereof by pulsed laser beam, the nozzle comprising a nozzle body having an upper and a lower nozzle member, which form the nozzle slot, and an opening for gas flow, which is arranged at the nozzle slot and which is capable of pulsed opening and closing, characterised in that piezoelectric or magnetostrictive control elements (41, 42) are arranged above the upper nozzle member (1) and/or below the lower nozzle member (2) and cause the respective nozzle member to move against the action of an elastic restoring force of a support member for the nozzle members to alter the width of the nozzle slot (15) between zero and its desired size.

FIG 1

FIG 2

FIG 3